# EUROPEAN PATENT APPLICATION

(11) **EP 1 767 598 A1**
(43) Date of publication of application: **28.03.2007**
(21) Application number: 06254868.0
(22) Date of filing: 20.09.2006
(51) Int. Cl.: C09D 11/00

(54) **Binder and inkjet ink compositions**

(30) Priority: 21.09.2005 US 719310 P
(71) Applicant: Rohm and Haas Company, Philadelphia, PA 19106-2399 (US)
(72) Inventor: Fasano, David Michael, Maple Glen Pennsylvania 19002 (US); Guo, Hailan, Warrington Pennsylvania 18976 (US); Lau, Willie, Lower Gwynedd Pennsylvania 19002 (US)
(74) Representative: Kent, Venetia Katherine

(57) **Abstract**

A polymeric binder useful in making inkjet ink formulations, especially for printing on substrates difficult to adhere to, is described. The polymeric binder includes high molecular weight and low molecular weight components. Also described is the method of making such binder and inks, as well as the images produced.

## Description

This invention relates to compositions containing polymeric dispersions and to their use in inks for ink jet printing. In particular this invention relates to binder dispersions including: (A) dispersed hydrophilic polymer having a number average molecular weight greater than 30,000 and (B) dispersed hydrophobic polymer having a number average molecular weight less than 30,000, and (D) an aqueous medium; and inkjet inks comprising such binders. This invention also relates to printing images on hydrophobic substrates with inks comprising such binders.

Ink jet printing involves printing an image onto a substrate using ink droplets ejected through a fine nozzle onto a substrate without bringing the fine nozzle into contact with the substrate. Adhesion of aqueous inks to polymeric and hydrophobic surfaces is difficult in the absence of polymeric binders. In such systems polymeric binders can be used to help form a bond between the hydrophobic substrate and the ink. Failure to form a good bond at the substrate/ink interface makes it difficult to maintain a fast image especially under uses where exposure to moisture, abrasion, or solvents occurs. It is known to include aqueous resin emulsions in ink formulations designed for printing on vinyl to improve adhesion and scratch resistance of resultant prints. For example European Patent Number 1420052 B1 discloses an aqueous ink jet ink containing a pigment and an emulsion polymer. Challenges remain with respect to achieving good adhesion of ink jet inks and high durability to abrasion, solvents and environmental exposure. Moreover, alternative solutions to solving adhesion and durability problems are needed for substrates which are considered difficult to adhere to, such as hydrophobic substrates, including vinyl substrates.

It is known in the adhesives industry that improvements in adhesion can be achieved through the use of low molecular weight polymers in conjunction with high molecular weight pressure sensitive adhesives. U.S. Patent Number 4,912,169 discloses that the post-addition of high softening point, low molecular weight polymers to pressure sensitive adhesive compositions can improve peel, shear and tack of pressure sensitive polymers. U.S. Patent Number 6,657,011 discloses the preparation of tackifiers, prepared in the presence of pressure sensitive adhesive compositions, using non-mercaptan based chain transfer agents. Such teaches fail to disclose inkjet ink compositions, where additional jettability concerns must be addressed.

It has now been found that mixtures of colorants with combinations of certain high molecular weight dispersed hydrophilic polymers and certain low molecular weight dispersed hydrophobic polymer in an aqueous medium results in a composition which is suitable as an ink for use in thermal and piezo ink jet printers, exhibits good ejection stability over long print time, and the resultant prints show improvements in abrasion resistance, water-fastness, optical density or chemical resistance.

The present invention provides a binder dispersion composition comprising: (A) dispersed hydrophilic polymer, having, in polymerized form, from 2 to 30 percent by weight of monomers containing a water dispersing group, wherein said dispersed hydrophilic polymer has a number average molecular weight greater than 30,000 and (B) dispersed hydrophobic polymer having, in polymerized form, from 0.5 to 25 percent by weight of monomers containing a water dispersing group, wherein said dispersed hydrophobic polymer has a number average molecular weight less than 30,000, and (D) an aqueous medium. The present invention further provides an ink jet ink comprising the binder dispersion composition, said ink jet ink also comprising a colorant (C). The present invention further provides an image on a substrate comprising the ink jet ink wherein the substrate has a hydrophobic surface and is selected from the group consisting of polymer coated paper, polyvinylchloride, polypropylene, polyester, plastic, glass, silicone coated substrate, substrates coated with fluorinated compounds, and combinations thereof.

As used herein, the term "aqueous medium" refers to a single phase that comprises water and optionally a water miscible organic solvent. As used herein the term "polymer" refers to naturally occurring or synthetic compounds, consisting of molecules made up of a linked series of repeated monomers and encompasses homopolymers, random copolymers, block copolymers, oligomers, and graft copolymers. As used herein, the term "dispersion" refers to a physical state of matter that includes at least two distinct phases, wherein a first phase is distributed in a second phase, with the second phase being an aqueous medium. An aqueous polymer dispersion is a dispersion containing a first phase distributed in an aqueous second phase that is predominately water and may contain minor amounts of water soluble or water-miscible liquids commonly used in preparing ink jet inks, such as lower alkyl alcohols, ketones, or glycols. As used herein, "dispersed polymer" refers to a polymer composition dispersed in an aqueous medium. For the purposes of this invention water dispersing groups means bound hydrophilic groups capable of rendering the polymer particles dispersible in an aqueous medium.

The type of hydrophilic groups capable of rendering the polymer particles water-dispersible are well known in the art, and can be ionic water-dispersing groups or non-ionic water-dispersing groups. The type of hydrophilic monomer used in a given polymer dispersion will dictate the total level of hydrophilic group needed to achieve a stable polymer dispersion. For example, it is typical that when an acid functional monomer is used as the hydrophilic monomer, the required amount of acid functional monomer needed for stability of the polymer dispersion is less than what is needed when using a hydroxyl functional monomer as the hydrophilic monomer.

As used herein the terms "hydrophobic" and "hydrophilic" are used in relation to each other. As such, a dispersed hydrophobic polymer and a dispersed hydrophilic polymer may each contain monomers, in polymerized form, that contain water dispersing groups. However the dispersed hydrophilic polymer will typically have a greater amount of monomers, in polymerized form, that contain water dispersing groups than will the dispersed hydrophobic polymer. When the dispersed hydrophilic polymer and dispersed hydrophobic polymer have similar amounts of monomers, in polymerized form, that contain water dispersing groups, the dispersed hydrophilic polymer will be distinguished from the dispersed hydrophobic polymer by their difference in molecular weight.

As used herein, dispersed hydrophilic polymer refers to dispersed polymer that contain, in polymerized form, from 2% to 30%, or from 4% to <30%, or from 5% to 20% by weight of total dispersed polymer, of monomer(s) wherein said monomer(s) contain a water dispersing group, and wherein said dispersed polymer has a number average molecular weight greater than 30,000, or greater than 80,000 or greater than 120,000 or anywhere in between or above.

As used herein, dispersed hydrophobic polymer refers to dispersed polymer that contain, in polymerized form, from 0.5% to 25%, or from 1% to 8%, or from 1% to 5% by weight of total dispersed polymer, of monomer(s) wherein said monomer(s) contain a water dispersing group or anywhere in between or below.

Unless otherwise specified, the term particle size as used herein refers to the number average particle diameter as determined using a capillary hydrodynamic fractionation apparatus, such as the Matec CHDF-2000 apparatus (Matec Applied Sciences, MA) with ultraviolet detection at 200 nm. Particle size standards are provided by National Institute of Standards and Technology (NIST) traceable polystyrene standards of 50 to 800 nm, such as supplied by Duke Scientific Corporation, CA.

The number average molecular weight, Mn, for components (A) and (B), may be measured by any of the well known techniques. Unless otherwise specified the term Mn, as used herein, refers to the number average molecular weight as determined by Size Exclusion Chromatography (SEC) using EasiCal PS-2^{®} polystyrene standards supplied by Polymer Laboratories . The weight average molecular weight, Mw, for components (A) and (B), may be measured by any of the well known techniques. Unless otherwise specified the term Mw, as used herein, refers to the weight average molecular weight as determined by SEC using EasiCal PS-2^{®} polystyrene standards supplied by Polymer Laboratories.

As used herein, the term "acid number" refers to the number of milligrams of KOH necessary to neutralize the free acid present in one gram of a substance. So, for example, a polymer comprising 1 % by weight, based on the total weight of the polymer, polymerized residues of methacrylic acid has an acid number of 6.5. As used herein, the use of the term "(meth)" followed by another term such as acrylate refers to both acrylates and methacrylates. For example, the term "(meth)acrylate" refers to either acrylate or methacrylate.

The dispersed polymer of this invention include polymers formed by the polymerization of one or more ethylenically unsaturated monomers, condensation polymers, or hybrid polymers containing both condensation polymer and addition polymer. Condensation polymers are polymers that are not formed by the addition polymerization of ethylenically unsaturated monomers, and include, for example, polyurethanes, polyureas, polyesters, polyamides, alkyds, polycarbonates, polysilicones such as the condensation product of siloxane derivatives, polyalkylene oxides, polyimides, polysulfones, polyacetals, and biopolymers such as polyhydroxy alkanoates, polypeptides, and polysaccharides.

High molecular weight polymers formed by the polymerization of one or more ethylenically unsaturated monomers may be polymerized by any means known in the art including solution, emulsion, high-pressure polymerization, miniemulsion, microemulsion, or suspension polymerization processes. Preferred is emulsion or miniemulsion. The practice of emulsion polymerization is discussed in detail in D.C. Blackley, Emulsion Polymerization (Wiley, 1975) and H. Warson, The Applications of Synthetic Resin Emulsions, Chapter 2 (Ernest Benn Ltd., London 1972). Description of mini-emulsions and their use in emulsion polymerization can be found in "Miniemulsion Polymerization" by J.M. Asua in Progress in Polymer Science, Volume 27, Pages 1283-1346 (2002), or in US2004077777A1.

In those embodiments of the invention utilizing emulsion or miniemulsion polymerization processes conventional surfactants may be used such as, for example, anionic and/or nonionic emulsifiers, ethylenically unsaturated surfactant monomers; and ethoxylated alcohols or phenols. The amount of surfactant used is usually 0.1 % to 6% by weight, based on the weight of monomer. Alternatively, steric stabilizers such as for example polyvinylalcohol or hydroxyethylcellulose, may be used in the polymerization process either alone or in combination with surfactants.

Either thermal or redox initiation processes may be used. The reaction temperature is maintained at a temperature lower than 100°C throughout the course of the reaction. Preferred is a reaction temperature between 30 °C and 95 °C, more preferably between 50 °C and 90 °C. The monomer mixture may be added neat or as an emulsion in water. The monomer mixture may be added in one or more additions or continuously, linearly or not, over the reaction period , or combinations thereof. When forming polymers of the invention by polymerization of ethylenically unsaturated monomers conventional free radical initiators may be used such as, for example, peroxides, percarbonates, azobis compounds, persulfates, perborates, and perphosphorates, typically at a level of 0.01 % to 5.0% by weight, based on the weight of total monomer. Redox systems using the same initiators (alternatively referred to as "oxidants" herein) coupled with a suitable reductant such as, for example, sodium sulfoxylate formaldehyde, ascorbic acid, sulfur containing acids, as well as other suitable acids and amines which are known reductants known to those skilled in the art. Redox reaction catalyzing metal salts may also be used.
The molecular weight of the polymers formed by the polymerization of ethylenically unsaturated monomers may be adjusted by the addition of a chain transfer agent and/or adjustment of the ratio of the initiator and monomers over the course of the reaction. Preferably chain transfer agents are used to adjust the molecular weight of the polymers formed by the polymerization of ethylenically unsaturated monomers. Typical chain transfer agents include allyl compounds, thiols, including but not limited to linear or branched alkyl mercaptans, halocarbons, long chain alcohols and cobalt macrocycles. When the dispersed polymer is acrylic, it is preferably obtained from the polymerisation of one or more olefinically unsaturated monomers having ionic and/or non-ionic water- dispersing groups, in the presence of one or more olefinically unsaturated monomers which are free from ionic and non-ionic water- dispersing groups.

Water dispersing groups used in the polymer dispersion of this invention may be anionic, cationic or nonionic. Examples of non-ionic water dispersing groups are, without limitation, hydroxyl groups, amide groups, carbamate groups, urethane groups, silanol groups, acetate groups, and polyalkylene oxide groups. Preferred olefinically unsaturated monomers having non-ionic water-dispersing groups include (meth)acrylamides, methylol (meth)acrylamides, hydroxy alkyl (meth)acrylates, vinyl acetates, alkoxy polyalkylene glycol (meth)acrylates, preferably having a Mn of from 250 to 2000. An example of such monomers which are commercially available include ω -methoxypolyethylene glycol acrylate.

When the water dispersible group is polyethylene oxide, the preferred ethylene oxide chain length is >4 ethylene oxide units, preferably >8 ethylene oxide units and most preferably >15 ethylene oxide units or anywhere in between. Preferably the polyethylene oxide group has a Mw from 175 to 5000 Daltons, or from 350 to 2200 Daltons, or from 660 to 2200 Daltons.

Preferred ionic water dispersing groups are anionic water dispersing groups especially carboxylic, phosphonic and or sulphonic acid groups. The anionic water dispersing groups are preferably fully or partially in the form of a salt. Conversion to the salt form is optionally effected by neutralisation of the dispersed polymer with a base, preferably during the preparation of the dispersed polymer and/or during the preparation of the composition of the present invention. Alternatively anionic dispersing groups may also be introduced by using blocked acids like tertiary butyl methacrylate, which can readily be hydrolysed upon dispersion.

Preferred olefinically unsaturated monomers which are free from ionic or non-ionic water-dispersing groups include aliphatic and aromatic alkyl(meth)acrylates, optionally substituted styrenes, substituted (meth)acrylamides, substituted pyrrolidones, ethylene, butadiene, and allyl compounds.

In some embodiments of the invention polymers formed by the polymerization of ethylenically unsaturated monomers may contain copolymerized multi-ethylenically unsaturated monomers.

In some embodiments of the invention it may be desirable to incorporate into one or more of the dispersed polymer, functional monomers which impart specialized performance to the aqueous ink jet ink. An example would be the inclusion of monomers bearing functional groups which impart improved adhesion to coated substrates, such as for example monomers described in U.S. Patent Number 6,887,933.

Preferably, the dispersed hydrophobic polymer contains a higher proportion of hydrophobic monomers, in polymerized form, than the dispersed hydrophilic polymer. Some examples of hydrophobic monomers include one or more C1 - C24 alkyl (meth)acrylates, aromatic and alkyl aromatic esters of (meth)acrylic acid; and unsaturated vinyl esters of (meth)acrylic acid such as those derived from fatty acids and fatty alcohols and combinations thereof. Preferably, monomer units of the dispersed hydrophobic polymer include lauryl (meth)acrylate, oleyl (meth)acrylate, palmityl (meth)acrylate, behenyl (meth)acrylate, stearyl (meth)acrylate, cetyl(meth)acrylate, eicosyl(meth)acrylate.

In some embodiments of the invention it may be useful to include a complexation agent or phase transfer agent, especially when highly hydrophobic monomers are used in the polymer composition. Suitable complexation or phase transfer agents include for example α-cyclodextrin, β-cyclodextrin, γ-cyclodextrin and cyclodextrin derivatives such as methyl-β-cyclodextrin, crown ethers, and the like. Such phase transfer agents and emulsion processes using this technique are described in U.S. Patent Number 5,521,266.

If the anionic water-dispersing groups are neutralised, the base used to neutralise the groups is preferably ammonia, an amine or an inorganic base. Suitable amines include tertiary amines, for example triethylamine or N,N-dimethylethanolamine. Suitable inorganic bases include alkali hydroxides and carbonates, for example lithium hydroxide, sodium hydroxide, or potassium hydroxide. A quaternary ammonium hydroxide, for example N ⁺(CH₃)₄OH⁻, can also be used. Generally a base is used which gives counter ions which may be desired for the composition. For example, preferred counter ions include Li⁺, Na⁺, K⁺, NH₄⁺ and substituted ammonium salts.

Cationic water dispersible groups can also be used, but are less preferred. Examples include pyridine groups, imidazole groups and or quaternary ammonium groups which may be neutralised or permanently ionised (for example with dimethylsulphate).

The Mn of the dispersed hydrophilic polymer, (A), is greater than 30,000, or greater than 80,000 or greater than 120,000 or anywhere in between or above. Preferably the Mn of (A) is less than 5 million, or less than 2 million. (A) may be formed in the presence of chain transfer agent to control molecular weight and / or gel fraction, gel fraction being that portion of the polymer insoluble in organic solvents.

(A) is hydrophilic by virtue of the presence of ionic and/or non-ionic water dispersing groups in the dispersed polymer. The dispersed hydrophilic polymer (A) are preferably prepared by polymerising one or more monomers having water-dispersing groups, with one or more monomers which are free from water-dispersing groups. The nature and level of water-dispersing groups in the polymer influences whether a solution, dispersion, emulsion or suspension is formed on dissipation of the polymer in aqueous media. The dispersed hydrophilic polymer (A) maintains its integrity as polymer particles in an aqueous medium. Preferably the level of monomers having water-dispersing groups in (A) is from 2 to 30% by weight of the dispersed hydrophilic polymer, or from 4 to <30%, or from 5 to 20%.

(A) is preferably dispersed acrylic, dispersed polyurethane, dispersed ethylene vinylacetate, or dispersed polyester polymer, prefereably dispersed acrylic or dispersed polyurethane polymer, or dispersed acrylic polymer, or a combination of dispersed acrylic and dispersed polyurethane polymer. (A) preferably has a glass transition temperature (Tg) from -10°C to 120°C or from 30°C to 120°C, or from 60°C to 120°C. The desired Tg of (A) will depend, in part, on the level of durability desired from the final printed image and the exact use of the image.

When (A) is dispersed polymer containing acid functional groups as water-dispersing groups, it preferably has an acid number from 15 to 200, more preferably from 10 to 120 and especially from 20 to 50.

The Mn of the dispersed hydrophobic polymer (B) is less than 30,000 or less than 20,000 or less than 10,000 or less than 5,000. Preferably the Mn of (B) is greater than 500. The molecular weight of (B) is preferably controlled through the use of a chain transfer agent, preferably linear or branched C₄-C₂₂ alkyl mercaptans such as n-dodecyl mercaptan and t-dodecyl mercaptan. Typically, (B) is formed by the free radical initiated polymerization of one or more ethylenically unsaturated monomers though other forms of initiation, including anionic initiation, may be contemplated. In some embodiments (B) can be formed by high temperature oligomerization processes as disclosed in U.S. Patent number 5,710,227. (B) preferably has little or no solubility in the aqueous phase of the inventive dispersions. Preferably (B) is formed in the presence of (A).

(B) contains ionic and/or non-ionic water dispersing groups in the dispersed polymer. The dispersed polymer particles (B) are preferably prepared by polymerising one or more monomers having water-dispersing groups, with one or more monomers which are free from water- dispersing groups. The nature and level of water-dispersing groups in the polymer influences whether a solution, dispersion, emulsion or suspension is formed on dissipation of the polymer in aqueous media. When prepared in the absence of (A), the dispersed polymer (B) maintains its integrity as polymer particles in an aqueous medium. The level of monomers having water-dispersing groups in (B) is from 0.5 to 25% by weight of the dispersed polymer, or from 1 % to 8%, or from 1 % to 5%.

(B) is preferably dispersed acrylic, dispersed ethylene vinylacetate, dispersed polyurethane or dispersed polyester polymer, preferably dispersed acrylic or dispersed polyurethane polymer, or dispersed acrylic polymer. (B) preferably has a glass transition temperature (Tg) from -10°C to 120°C or from 30°C to 120°C, or from 60°C to 120°C. The desired Tg of (B) will depend, in part, on the level of durability desired from the final printed image and the exact use of the image. When (B) is dispersed polymer containing acid functional groups as water-dispersing groups, it preferably has an acid number from 2 to 100, or from 5 to 50 and especially from 5 to 30.

Components (A) and (B) optionally each comprise a mixture of polymers. For example component (A) may comprise a mixture of hydrophilic acrylic polymers or a mixture of a hydrophilic acrylic polymer and a hydrophilic polyurethane polymer. Preferably (A) and (B) are copolymers. It is preferable that (A) has a greater percentage of monomers having water dispersing groups than (B). Preferably the level of monomers, in polymerized form, having water dispersing groups in (A) relative to the level of monomers, in polymerized form, having water dispersing groups in (B) is at least 5:4, or at least 5:1, or at least 10:1 or at least 20:1. (A) and (B) may be independently selected from dispersed acrylic or dispersed polyurethane or dispersed polyester polymer, or any combination thereof. Preferably (A) is dispersed acrylic or dispersed polyurethane polymer, or a combination of dispersed acrylic and dispersed urethane, and (B) is dispersed acrylic polymer, in each case having the Mn as specified above. It is preferable that Mn for component (A) is greater than the Mn for component (B). On dispersion the particle size of component (A) and component (B) is preferably from 20 to 500nm, more preferably from 20 to 350nm, especially from 50 to 200nm. Particle size can be measured by, for example, laser light scattering electron microscopy.

Components (A) and (B) are purified if desired in the usual way for colorants used in ink jet printing inks, for example by ion-exchange, filtration, reverse osmosis, dialysis, ultra- filtration or a combination thereof. In this way one may remove cosolvents used for the polymerisation, low molecular weight salts, impurities and free monomers.

Components (A) and (B) can be combined in a number of ways. For example, components (A) and (B) can be prepared separately, followed by combination by blending. The blending may be performed at any stage, for example before components (A) and (B) are added to the aqueous medium, or components (A) and (B) may be incorporated individually into the aqueous medium and then blended. Preferably components (A) and (B) are combined by preparing component (B) by in-situ aqueous emulsion in the presence of component (A).

The weight ratio, in parts based on one hundred parts, of component (A) to component (B) is preferably from 99:1 to 50:50, more preferably from 95:5 to 60:40, especially from 90:10 to 70:30. The Tg of (A) and (B) may be the same or different from each other.

The colorant, component (C), may be a soluble colorant or insoluble in the aqueous medium. (C) is preferably a water-insoluble colorant such as a pigment, dispersed dye or polymer encased dye. (C) is preferably an inorganic or organic pigment. Preferred inorganic pigments include titanium dioxide, zinc oxide, zirconium oxide, chromium oxide, iron oxide and combinations thereof. Preferred organic pigments include but are not limited to carbon black, phthalocyanine, anthraquinone, perinone, indigoid, perylene, azo, benzimidazolones, carbon black pigments carrying ionic groups, azomethine, condensed ring pigments and pigments as mentioned in the Colour Index International, Third Edition (1982) Pigments and Solvent dyes, pages 10 to 143, which are incorporated herein by reference thereto. Carbon black pigments carrying optionally water-dispersing groups, especially ionic groups, for example anionic and/or cationic groups. The anionic groups preferably comprise a carboxylic , sulphonic or phosphonic acid group. The catioriic groups preferably comprise a quaternary ammonium group. Preferred carbon black pigments are those carrying ionic groups. Preferred carbon black pigments are carbon black pigments having a mean particle size of from 5 to 150 nm, or 10 to 100 nm, or 10-50 nm. Color pigments may also include mixed crystal pigments. For example copper phthalocyanine exists in α, β, γ, and ε forms and quinacridone is known in α, β, γ, and δ forms. Pigments may additionally be stabilized by chemical modification for example with a chlorinated derivative. Benefits of mixed crystal systems include at least one of improved formulated ink stability, color and color strength, dispersion stability, and light stability. Additionally mixtures of pigments consisting of an unsubstituted form with a substituted form can be used.

When (C) is a pigment it may be polymer dispersed, latex dispersed, or self dispersed or any combination thereof. Self dispersed pigments include, without limitation, those that have had their surfaces modified with ionic or dispersing groups such as for example pigments that have been oxidized, reacted with sulfur containing compounds, such as sulfur trioxide, or modified using diazotization chemistry such as pigments commercially available from Cabot Corporation for example the CaboJet^{™} Dispersions. Surface modified pigments may also be those that have been further functionalized with organic or inorganic functional groups. Modified pigments also include pigments that have been encapsulated such as for example by a polymer, a polyalkylene oxide functional polymer, or by an inorganic surface layer such as a silicate or siloxane.

The pigment used in the composition of the present invention is optionally a mixture comprising two or more pigments. Pigments are present in any effective amount in the composition, typically from about 1 to about 15 percent, or from about 1 to 10 percent, or from about 1 to 5 percent, by weight of the composition.

Colorant (C) may be (i) a self dispersed pigment, (ii) a polymer dispersed pigment, (iii) an encapsulated pigment, (iv) a hollow sphere polymer, (v) a water soluble dye, (vi) a water-insoluble dye, (vii) a dispersed dye, or (viii) combinations thereof.

The aqueous medium, component (D), comprises water and optionally a water miscible organic solvent. Suitable water-miscible organic solvents include solvents that have a miscibility in water of at least 2%. Preferably the aqueous medium comprises a water-miscible organic solvent The aqueous medium may also comprise a water-immiscible organic solvent. Suitable water-immiscible organic solvents include but are not limited to optionally substituted aromatics and aliphatics, petroleum distillates, natural and synthetic oils, esters, water immiscible alcohols, C₈-C₁₂ substituted pyrrolidones and mixtures thereof.

The compositions according to the present invention may be prepared by combining components (A), (B), (C) and (D) in any order. Suitable combining techniques are well known in the art, for example agitation, grinding, milling, ultrasonication or stirring of all the components. Preferably the composition is prepared by mixing components (A), (B), and (D) and optionally further components until the composition is homogenous. The mixture may then be added slowly with stirring to component (C) before adjusting the pH by addition of a base. Components (A), (B), (C) and (D) are preferably combined together under conditions which retain stability and avoid flocculation. The preferred pH range of the composition is of from 7 to 11, more preferably of from 8 to 10. Preferably the composition comprises: (i) from 0.1 to 20 parts, more preferably 1 to 10 parts, especially 1 to 5 parts of component (A); (ii) from 0.1 to 10 parts, more preferably 1 to 5 parts, especially 1 to 5 parts, of component (B); (iii) from 0.1 to 15 parts, more preferably 1 to 10 parts, especially 1 to 5 parts of component (C); and (iv) from 75 to 98 parts, more preferably 75 to 90 parts, especially 80 to 90 parts of component (D); wherein all the parts are by weight and the parts by weight of (i) + (ii) + (iii) + (iv) add up to 100. The viscosity of the composition at 20°C is preferably less than 100 mPa.s or less than 15 mPa.s and most preferably less than 5 mPa.s.

Preferably the composition has been filtered through a filter having a mean pore size below 10 µm, preferably below 5 µm, more preferably below 2 µm, especially below 0.45 µm. In this way particulate matter is removed which could otherwise block fine nozzles in an ink jet printer.

Pure compositions of this type may be prepared by using high purity ingredients and/or by purifying the composition after it has been prepared. Suitable purification techniques are well known, for example ultrafiltration, reverse osmosis, ion exchange and combinations thereof.

In addition to components (A), (B), (C) and (D), the composition optionally contains other components, such as a biocide, a fungicide, a rheological agent such as a saccharide, a wax, or a clay, a chelating agent, an IR absorber, or a fluorescent brightener, and/or UV absorber. Furthermore the compositions optionally contain a surface active agent, wetting agent and/or an emulsifier, for example those described in McCutcheon's Emulsifiers and Detergents 1996 International Edition or in Surfactants Europa 3rd Edition 1996 each of which is incorporated herein by reference. Preferred surface active agents include acetylenic surfactants, such as the Surfynol(TM) series of surfactants from Air Products; nonionic and anionic polyoxyalkylene oxides; and salts of fatty alcohol ether sulfates, salts of alkylphenyl ether sulfates, such as sodium laureth sulfate and the Disponil^{™} FES and Disponil^{™} AES surfactants available from Cognis; phosphates, sulfates and carboxylate salts of alkyl, aryl, or alkenyl ethers; and alkyl, aryl, alkenyl mercaptan alkoxylates.

The compositions according the invention have the advantage that they provide images with good adhesion and durability when applied to hydrophobic and/or non-porous substrates. The compositions are suitable not only for the use in piezoelectric ink jet printers, thermal ink jet printers and continuous ink jet printers. Such compositions form discrete droplets on the substrate with little tendency for diffusing.

The substrate is preferably a paper with a hydrophobic and/or non-porous coating, such as for example a polymer coating, a fluoro-functional coating, a silicone functional coating; glass; or a plastic film or sheet, such as for example polyvinylchloride, polypropylene, polyester, or a synthetic textile material. The ink jet printer may have external means for heating the substrate before the ink is applied and/or means for heating the image after the ink is applied. According to a further feature of the invention there is provided an ink jet printer cartridge, optionally refillable, containing a composition as hereinbefore defined.

The following examples are provided as non-limiting illustrations of the invention. The abbreviations shown below are used herein.

| Abbreviation | |
|---|---|
| APS | Ammonium Persulfate |
| BA | Butyl acrylate |
| CHDF | Capillary Hydrodynamic Fractionation |
| DBS | Dodecyl benzene sulfonate, supplied as 22% solids. |
| GC | Gas chromatograph |
| HPLC | High performance liquid chromatography |
| Init. | Initiator |
| MAA | Methacrylic acid |
| MMA | Methyl methacrylate |
| Na2CO3 | Sodium Carbonate |
| nDDM | n-Dodecylmercaptan |
| 2-EHA | 2-ethylhexyl acrylate |
| IBOMA | Isobornyl methacrylate |
| SMA | Stearyl methacrylate |
| Me-β-CD | Methyl-beta-Cyclodextrin - Cavasol W7 M from Wacker Fine Chemicals, supplied as 50% solution |

### EXAMPLES

### EXAMPLE1: Polymer Dispersion 1 (77MMA/18 2-EHA/5MAA)

This example illustrates preparation of a polymer dispersion having a number average molecular weight greater than 30,000. A sample of binder with the general composition of methyl methacrylate (MMA), 2-ethyl hexyl acrylate (2-EHA) and methacrylic acid (MAA) is prepared as follows. First heat a reaction vessel containing 1226 ml deionized, buffered water (0.166 meq buffer/g water), 1.6 g ammonium persulfate (APS), and 95.6g of an acrylic polymer dispersion (average particle size = 97nm, 45% solids) to 88°C. Next, add to this, a mixture of 262 g water, 2.30 g sodium allyl dodecyl sulfosuccinate (38.6% solids), 611 g methyl methacrylate (MMA), 143 g 2-ethylhexyl acrylate (2-EHA), and 40.2 g methacrylic acid (MAA) - together with a mixture of 0.82 g ammonium persulfate (APS) and 35.6 g water, over a period of 120 minutes. After the monomer addition is completed, the vessel is held at 88°C for 20 minutes and then cooled to 65°C, held for 45 min, then cooled to 45°C, and diluted with 132g water. A 2617g sample of this mixture is then neutralized to a pH of 8.0 with 4% KOH. The product is then filtered through 100 and 325 mesh screens to give the final sample. The percent (%) solids level of the sample is 31.38% and the Tg is 72.8°C by DSC.

### EXAMPLE 2: Polymer Dispersion 2 (46.9 IBOMA/46.9 SMA/0.9 MAA/5.3 n-DDM)

This example illustrates preparation of a polymer dispersion having a number average molecular weight less than 30,000. The emulsion polymerization in this example is carried out in a 4-liter round bottom flask with four necks equipped with a mechanical stirrer, temperature control device, condenser, monomer and initiator feed lines and a nitrogen inlet. Deionized water (200 g), Polystep B-2 (9.4 g), Me-β-CD (29.5 g), sodium carbonate (2.5 g) are introduced into the reaction flask at room temperature. The contents were heated to 85°C while stirring under nitrogen purge. Monomer emulsion (ME) of deionized water (313 g), ethoxylated C6 to C18 alkyl ether sulfate having from 1 to 40 ethylene oxide groups per molecule (30% active in water) (4.7 g), isobornyl methacrylate (371.3 g), stearyl methacrylate (371.3 g), methacrylic acid (7.5 g), and n-dodecyl mercaptan (42.0 g) were prepared.

At 85°C, ammonium persulfate (2.5 g in 15 g of water) was introduced into the reaction kettle. After a 2 minutes hold, a polymer seed latex (68.8 g) was slowly added over 5 minutes. At 85°C, ME was fed to the reaction kettle over a period of 120 minutes. An initiator (0.5 g of ammonium persulfate in 50 g of water) solution was cofed together with the monomer emulsion. After the ME feed, the content was held at 85°C for 20 minutes. The emulsion polymer was chased with a redox initiator, neutralized and characterized with conventional methods.

Polystep B-2 is a sodium lauryl sulfate surfactant supplied by Stepan Company, Illinois, USA. Methyl-beta-cyclodextran (50.8% active in water) is supplied by Wacker Fine Chemicals.

### EXAMPLES 3 & 4: Hydrophilic Polymer Dispersion with In-Situ Hydrophobic Polymer Dispersion Preparation

This example illustrates preparation of a hydrophilic polymer dispersion having a number average molecular weight greater than 30,000 with in-situ preparation of a hydrophobic polymer dispersion having a number average molecular weight less than 30,000. The two stages emulsion polymerization in this example are carried out in a 4-liter round bottom flask with four necks equipped with a mechanical stirrer, temperature control device, condenser, monomer and initiator feed lines and a nitrogen inlet. The temperature of the polymerization is maintained at 85°C. Deionized water (700 g) and SLS (16.8 g) are introduced into the reaction flask at room temperature. The contents are heated to 85°C while stirring under nitrogen purge. Monomer emulsion (ME A and B) of deionized water, ethoxylated C6 to C18 alkyl ether sulfate having from 1 to 40 ethylene oxide groups per molecule (30% active in water) and monomers were prepared in accordance with Table 1 in grams. Polymer dispersion 3 is prepared as follows. At 85°C, 62.4 of ME 3A and buffer (6.5 g of sodium carbonate in 33.5 g of water) are introduced into the reaction flask. After a 1 minute hold at 85°C, ammonium persulfate (6.3 g in 26 g of water) is introduced into the reaction kettle. Follow the exotherm and 10 minutes hold, 37.4 g of Me-beta-CD (50.8% solids) was added and the remaining ME 3A was fed to the reaction kettle over a period of 60 minutes. A cofed initiator (1 g of ammonium persulfate in 102 g of water) was fed over both stages together with the monomer emulsion (ME 3A following by ME 3B) over a period of 60 minutes. After the ME feed, the emulsion polymer was chased with a redox initiator, neutralized and characterized with conventional methods. Polymer dispersion 4 is carried out similarly.

### EXAMPLE 5: Hydrophobic Polymer Dispersion with In-Situ Hydrophilic Polymer Dispersion Preparation

This example illustrates preparation of a hydrophobic polymer dispersion having a number average molecular weight greater than 30,000 with in-situ preparation of a hydrophilic polymer dispersion having a number average molecular weight less than 30,000. The two stages emulsion polymerization in this example are carried out in a 4-liter round bottom flask with four necks equipped with a mechanical stirrer, temperature control device, condenser, monomer and initiator feed lines and a nitrogen inlet. The temperature of the polymerization is maintained at 85°C. Deionized water (700 g) and SLS (16.8 g) are introduced into the reaction flask at room temperature. The contents are heated to 85°C while stirring under nitrogen purge. Monomer emulsion (ME A and B) of deionized water, ethoxylated C6 to C18 alkyl ether sulfate having from 1 to 40 ethylene oxide groups per molecule (30% active in water) and monomers were prepared in accordance with Table 1 in grams. Polymer dispersion 5 is carried out similarly to polymer dispersion 3.

**Table 1: Compositions of in-situ oligomer/Polymer Dispersion Preparations**

| Polymer Dispersion | ME | H₂O | SLS | EHA | MMA | MAA | nDDM | % H2O Dispersible Monomer¹ | Acid Number |
|---|---|---|---|---|---|---|---|---|---|
| 3 | 3A | 588 | 13.4 | 269.6 | 1153.1 | 74.9 | 0 | 5.0 | 32.5 |
| | 3B | 145 | 3.36 | 67.4 | 288.3 | 18.7 | 41.2 | 4.5 | 29.2 |
| 4 | 4A | 588 | 13.4 | 269.6 | 1153.1 | 74.9 | 0 | 5.0 | 32.5 |
| | 4B | 145 | 3.36 | 70.4 | 300.2 | 3.7 | 41.2 | 0.89 | 5.8 |
| 5 | 5A | 588 | 13.4 | 269.6 | 1153.1 | 74.9 | 0 | 5.0 | 32.5 |
| | 5B | 145 | 3.36 | 64.0 | 273.0 | 37.4 | 41.2 | 9.0 | 58.5 |

| | | | | | | | | | |
|---|---|---|---|---|---|---|---|---|---|
| ¹% Monomer with H2O dispersible groups based on polymer. | | | | | | | | | |

### EXAMPLE 6: Characterization of Dispersed Polymers

Polymer dispersions 1 through 5 are characterized by various analytical techniques to determine wt% solids; particle size; molecular weight. Results are shown in Table 2. Weight percent solids are determined by gravimetric analysis. Particle size is obtained using a Matec CHDF 2000 particle size analyzer and molecular weights were measured by SEC using a polystyrene standard from Polymer Laboratories (PS-1) having a peak average molecular weight ranging from 580 to 7,500,000. Mark-Houwink constants were applied for the conversion.

**Table 2: Characterization of Dispersed Polymer Preparations**

| Emulsion Polymers | %solids | Particle Size (nm) | pH | Mw/Mn |
|---|---|---|---|---|
| Polymer Dispersion 1 | 31.4 | 257 | 8.0 | 461000/152000 |
| Polymer Dispersion 2 | 47.5 | ⁽¹⁾ | 9.2 | 6720/4965 |
| Polymer Dispersion 3 | 50.7 | 129 | 6.7 | ⁽²⁾ |
| Polymer Dispersion 4 | 50.9 | 131 | 6.5 | ⁽³⁾ |
| Polymer Dispersion 5 | 50.3 | 132 | 6.5 | ⁽⁴⁾ |

| | | | | |
|---|---|---|---|---|
| ⁽¹⁾ There are several modes in the particle size measurement with the primary mode (>90%) about 260-310 nm. ⁽²⁾ There is a bimodal distribution of the molecular weight distribution with the Mw/Mn of 268644/159393 and 5276/3185 for the high and low molecular weight fraction, respectively. ⁽³⁾ There is a bimodal distribution of the molecular weight distribution with the Mw/Mn of 272519/157805 and 5020/3063 for the high and low molecular weight fraction, respectively. ⁽⁴⁾ There is a bimodal distribution of the molecular weight distribution with the Mw/Mn of 301097/183715 and 5023/3042 for the high and low molecular weight fraction, respectively. | | | | |

### EXAMPLE 7: Preparation of Inkjet Inks

This example illustrates preparation of inkjet inks comprising the polymer dispersions of Examples 1 through 5, as indicated. The inkjet ink may be prepared by any method known in the art such as, for example, by mixing, stirring or agitating the ingredients together. All numbers are on a weight basis. The ink compositions shown in the tables below are made by blending all of the ingredients together except for the dispersed polymer and the pigment dispersion. This is followed by addition of the dispersed polymer and pigment dispersion with mixing. The dispersed polymer is then added to the mixture gradually while stirring. The pigment dispersion is added last to the above mixture gradually while stirring. The final inks are filtered using a 1 micron fiberglass filter (made by Pall Corporation, Ann Arbor, Ml 48103, USA). The viscosity is measured using a BrookField viscometer (made by Brookfield ENG LABS INC., Stoughton, MA 02072, USA) at 30rpm with Ultra Low (UL) Adapter and spindle. The Surface tension is measured using Fisher Scientific surface tensiometer 20 (made by Fisher Scientific, USA).

**Table 3: Ink Formulation Samples 1 Through 10**

| | | | | | | | | | | |
|---|---|---|---|---|---|---|---|---|---|---|
| | | | | | | | | | | |

| Ink Formulation | 1 | 2 | 3 | 4 | 5 | 6 | 7 | 8 | 9 | 10 |
|---|---|---|---|---|---|---|---|---|---|---|
| Cab-O-Jet^{™} 250 Cyan | 35 | | | | 30 | | | | 35 | |
| Cab-O-Jet^{™} 260 Magenta | | 35 | | | | 30 | | | | |
| Cab-O-Jet^{™} 270 Yellow | | | 35 | | | | 30 | | | |
| Cab-O-Jet^{™} IJX 352B Black | | | | 23.3 | | | | 20 | | 20 |
| Glycerol | 2.5 | 2.5 | 2.5 | 2.5 | | | | | 2.5 | 2.5 |
| 2-pyrrolidinone | | | | | 10 | 10 | 10 | 10 | | |
| 1,3-propane diol | 15 | 15 | 15 | 15 | 15 | 15 | 15 | 15 | 15 | 15 |
| Aerosol OT-75% | 1.6 | 1.6 | 1.6 | 1.6 | | | | | 1.6 | 1.6 |
| TEGO Wet KL245 | | | | | 1.0 | 1.0 | 1.0 | 1.0 | | |
| Polymer Dispersion 1 | 20 | 20 | 20 | 20 | | | | | 20 | 20 |
| Polymer Dispersion 2 | 5 | 5 | 5 | 5 | | | | | | |
| Polymer Dispersion 3 | | | | | 20 | 20 | 20 | 20 | | |
| Dl water | 20.9 | 20.9 | 20.9 | 32.6 | 24 | 24 | 24 | 34 | 25.9 | 40.9 |
| Total | | | | | 100 | 100 | 100 | 100 | 100 | 100 |

| | | | | | | | | | | |
|---|---|---|---|---|---|---|---|---|---|---|
| Note: Cab-O-Jet^{™} is trademark of Cabot Corporation, Billerica, MA. AEROSOL^{®} is a trademark of Cytec Industries Inc., West Paterson, NJ. TEGO wet^{®} is trademark of Goldschmidt Chemical Corp., Hopewell, VA. | | | | | | | | | | |

### Ink Printability Test Results

Ink printing tests were performed with wide format printer Mimaki JV-3 manufactured by Mimaki Engineering, Japan. Jettability is determined by printing an initial test pattern on a substrate, followed by printing 5 square meters, then printing a final test pattern and checking for clogged or misfired nozzles. An increase in number of nozzles missed or number of nozzles misdirected is an indication of poor printability. Ink samples 1-4 exhibited poor initial test patterns indicating a failed initial print test. Ink samples 5-10 all passed the printing test, indicating that the separate addition of polymer dispersion 2, a dispersed hydrophobic polymer in relation to the more hydrophilic polymer dispersions 1 and 3, has a deleterious effect on printability. The results are shown in Table 4 below.

### Ink Adhesion Test Results

Ink samples from 1-10 were printed on hydrophobic glossy self-adhesive backed cast vinyl films from Avery (model number MP 1005 EZ) with a platen temperature of 60°C, the printed solid color blocks were then cured in an oven at a temperature of 80°C for 5 minutes. Then the ink abrasive adhesion and scratch adhesion tests were performed using the following test protocols:

### Abrasive Adhesion Test Method

Taber linear abrasive tester with CS-10 Wearasers^{™}. Testing was performed at the conditions: stroke length: 3 inches, speed: 25; and loading of 600g. The ink durability was qualitatively rated from 0 to 4 based on the following criteria:
0: no damage
1: some gloss loss, but no color loss
2: small color loss
3: medium color loss
4: severe color loss

### Scratch Adhesion Test Methods

Adhesion of the ink was tested by rubbing the cured ink with a tissue using moderate pressure. The adhesion was qualitatively rated by examining the amount of ink transferred to the tissue and the amount of ink smeared to adjacent non-printed areas. The adhesion was further tested by scratching the image with a fingernail with moderate pressure. The adhesion was rated from 0 to 4 (best to worst). The results are shown in Table 4 below.

**Table 4: Results of Printability, Abrasion and Scratch Resistance Tests**

| Ink Sample No. | Printability | Abrasive adhesion | Scratch adhesion |
|---|---|---|---|
| 1 | Fail | 0 | 0 |
| 2 | Fail | 0 | 0 |
| 3 | Fail | 0 | 0 |
| 4 | Fail | 0 | 0 |
| 5 | Pass | 0 | 1 |
| 6 | Pass | 0 | 1 |
| 7 | Pass | 0 | 1 |
| 8 | Pass | 0 | 1 |
| 9 | Pass | 2 | 3 |
| 10 | Pass | 2 | 3 |

The results shown in Table 4 indicate that the presence of low molecular weight dispersed polymer has a beneficial impact on adhesion and fastness.

### Comparison of Hydrophilic Content

Inkjet inks are prepared comprising polymer dispersions 4 and 5 as shown in Table 5, by the same methods described for the inkjet inks shown in Table 3.

**Table 5: Ink Formulation Samples 11-14**

| Ink Formulation | 11 | 12 | 13 | 14 |
|---|---|---|---|---|
| Cab-O-Jet^{™} IJX 352B Black | 12 | | 12 | |
| Cab-O-Jet^{™} 260 Magenta | | 30 | | 30 |
| 2-Pyrrolidone | 10 | 10 | 10 | 10 |
| 1,3 propane diol | 15 | 15 | 15 | 15 |
| Alcodet SK | 1.5 | 1.5 | 1.5 | 1.5 |
| Polymer Dispersion 4 | 12 | 12 | | |
| Polymer Dispersion 5 | | | 12 | 12 |
| Dl water | 49.5 | 31.5 | 49.5 | 31.5 |
| Total | 100 | 100 | 100 | 100 |

Ink printing tests were performed with wide format printer Mimaki JV-3 manufactured by Mimaki Engineering, Japan. Jettability is determined by printing an initial test pattern on a substrate, followed by printing 12.5 square centimeters, then printing a final test pattern and checking for clogged or misfired nozzles. An increase in number of nozzles missed or number of nozzles misdirected is an indication of poor printability. Ink samples 13 and 14 exhibited poorer initial test and final test patterns than ink samples 11 and 12, indicating improved printability for the ink system where the polymer dispersions having a lower hydrophilic content. The results are shown in Table 6.

**Table 6: Printability Results**

| Ink Sample | Initial Printability | | Final Printability | |
|---|---|---|---|---|
| | Nozzles Missed | Nozzles Misdirected | Nozzles Missed | Nozzles Misdirected |
| 11 | 0 | 0 | 1 | 0 |
| 12 | 0 | 1 | 1 | 1 |
| 13 | 0 | 10 | 1 | 11 |
| 14 | 0 | 0 | 4 | 1 |

The inks prepared from binders containing dispersed hydrophobic polymer wherein the weight % monomer with H2O dispersible groups is increased to 9.0% exhibited poorer printability compared to the inks prepared from binders containing dispersed hydrophobic polymer wherein the weight % monomer with H2O dispersible groups is 0.9%.

## Claims

1. A binder dispersion composition comprising: (A) dispersed hydrophilic polymer, having, in polymerized form, from 2 to 30 percent by weight of monomers containing a water dispersing group, wherein said dispersed hydrophilic polymer has a number average molecular weight greater than 30,000 and (B) dispersed hydrophobic polymer having, in polymerized form, from 0.5 to 25 percent by weight of monomers containing a water dispersing group, wherein said dispersed hydrophobic polymer has a number average molecular weight less than 30,000, and (D) an aqueous medium.

2. The binder dispersion composition of claim 1 wherein (A) has a number average molecular weight greater than 120,000.

3. The binder dispersion composition of claim 1 wherein (B) has a number average molecular weight less than 5,000.

4. The binder dispersion composition of claim 1 wherein (A) has, in polymerized form, from 5 to 20 percent of monomers containing a water dispersing group.

5. The binder dispersion composition of claim 1 wherein (B) has, in polymerized form, from 1 to 5 percent of monomers containing a water dispersing group.

6. The binder dispersion composition of claim 1 wherein (B) is polymerized in the presence of (A) or (A) is polymerized in the presence of (B).

7. The binder dispersion composition of claim 1 wherein the level of monomers, in polymerized form, having water dispersing groups in (A) relative to the level of monomers, in polymerized form, having water dispersing groups in (B) is at least 5:4.

8. The binder dispersion composition of claim 1 wherein the weight ratio of (A) to (B) is from 99:1 to 50:50.

9. The binder dispersion composition of claim 1 wherein the weight ratio of (A) to (B) is from 90:10 to 70:30.

10. An ink jet ink comprising any of the binder dispersion compositions of claims 1 through 9, said ink jet ink also comprising a colorant (C).

11. The ink jet ink of claim 10 wherein the colorant (C) is selected from the group consisting of: (i) a self dispersed pigment, (ii) a polymer dispersed pigment, (iii) an encapsulated pigment, (iv) a hollow sphere polymer, (v) a water soluble dye, (vi) a water-insoluble dye, (vii) a dispersed dye, and (viii) combinations thereof.

12. An image on a substrate comprising an inkjet ink of claim 10 wherein the substrate has a hydrophobic surface and is selected from the group consisting of polymer coated paper, polyvinylchloride, polypropylene, polyester, plastic, glass, silicone coated substrate, substrates coated with fluorinated compounds, and combinations thereof.
